# EUROPEAN PATENT SPECIFICATION

(11) **EP 0 480 108 B1**
(45) Date of publication and mention of the grant of the patent: **01.02.1995**
(21) Application number: 90311227.4
(22) Date of filing: 12.10.1990
(51) Int. Cl.: B60T 7/08

(54) **Parking-brake operating device**
Betätigungseinrichtung für eine Feststellbremse
Dispositif d'application du frein de stationnement

(43) Date of publication of application: 15.04.1992
(73) Proprietor: MITSUBISHI JIDOSHA KOGYO KABUSHIKI KAISHA, Tokyo 108 (JP); JOHNAN SEISAKUSHO COMPANY LIMITED, Ueda-shi, Nagano (JP)
(72) Inventor: Naoi, Yasushi, Asao-ku Kawasaki-shi Kanagawa (JP); Kobayashi, Kenichi, Kouhoku-ku Yokohama-shi Kanagawa (JP); Ota, Harutoshi, Ueda-shi Nagano (JP); Kuribayashi, Yasushi, Ueda-shi Nagano (JP)
(74) Representative: Mounteney, Simon James

(56) References cited:
- EP-A- 0 250 185
- DE-A- 1 755 911
- FR-A- 2 582 272
- FR-A- 2 599 690
- GB-A- 2 196 416
- US-A- 3 314 716
- US-A- 4 429 590

## Description

### BACKGROUND OF THE INVENTION

### Field of the Invention

The present invention relates to a parking-brake operating device.

### Description of the Prior Art

The conventional parking-brake operating device is arranged such that an operating lever having directly connected thereto a control cable is moved to apply braking to a brake and, under this condition, the operating lever is fixed to hold the braking force of the brake. Further, it is common that the fixing of the operating lever is practiced by engagement of a ratchet pawl provided on the operating lever to a ratchet of a bracket provided on the side of a body of an automotive vehicle. A braking-force holding mechanism for holding the braking force of the brake is composed of the operating lever, the ratchet wheel and a ratchet wheel on the side of the body of the automotive vehicle. The operating lever is provided with a release element such as a release rod or the like for disengaging the ratchet pawl and the ratchet wheel from each other to release fixing of the operating lever, therby releasing the brake.

The conventional parking-brake operating device has the following disadvantages. That is, under the condition that the brake is operated, the operating lever is always in a full-cock position, so that the projecting operating lever prevents getting-on and -off of a driver, and a space within the vehicle is reduced or narrowed.

### SUMMARY OF THE INVENTION

It is an object of the invention to provide a parking-brake operating device in which brake operation is practiced by an operating lever, a braking force of a brake is held by a braking-force holding mechanism and, subsequently, the operating lever is returned by a predetermined quantity permitted between a swing arm of the braking-force holding mechanism and the operating lever, whereby, even under the condition that the brake is operated, the operating lever does not unnecessarily project from a driver's seat or the like, thus, such disadvantages can be avoided that the getting-on and -off of the driver is prevented by the operating lever, and the space within the vehicle is made small, and in which it can be avoided that the operating lever returned from practicing of the brake operation is inadvertently returned to an original position of the brake release over or beyond a permitted predetermined quantity, and it is possible to easily confirm the operating condition of the brake.

DE-A-1755911 and EP-A-250185 disclose a mechanism for operating the parking brake or hand brake of a vehicle, comprising a pivotable operating lever, a brake operating member movable by the lever, and a ratchet mechanism for holding the lever and operating member in a brake-engaged position, characterised in that the operating member is coupled to the operating lever through a lost-motion connection and the ratchet mechanism acts to retain the brake operating member, whereby alter the operating lever has been moved to engage the brake, it can be moved partly towards its rest position by an amount determined by the lost-motion connection, while the operating member is held in its operated position by the ratchet mechanism.

The present invention aims to provide an improved mechanism of the above-described type.

According to the present invention, a parking brake (hand brake) operating device comprises the features set out in claim 1.

When the operating lever is raised up from the condition of brake release, the support shaft provided on the swing arm and loosely fitted in the opening in the operating lever is abutted against one side of the opening in the operating lever, so that the operating lever, the support shaft and the swing arm are angularly moved together. The cable mounting element connected to the support shaft draws or tensions the control cable to operate the brake operating device. Thus, the brake is operated.

The ratchet pawl supported by the swing arm for angular movement is engaged with the ratchet wheel of the bracket to hold the swing arm onto the bracket. Thus, the support shaft mounted to the swing arm is prevented from being returned to maintain the braking force of the brake.

When the operating lever is moved relatively to the swing arm from the condition that the support shaft is abutted against the one side of the opening in the operating lever, to the condition that the support shaft is abutted against the other side of the opening in the operating lever, it is possible to avoid unnecessary projection of the operating lever.

The release knob is pushed to rotate the lever element by the other end of the release element, and the ratchet pawl is moved angularly by the link element connected to the other end of the lever element to disengage the ratchet pawl and the ratchet wheel from each other. Thus, the swing arm is returned to its original position, so that the braking of the brake is released.

### BRIEF DESCRIPTION OF THE DRAWINGS

Fig. 1 is a cross-sectional side elevational view of a parking-brake operating device according to the invention, with a brake released;
Fig. 2 is a cross-sectional side elevational view showing a full-cock condition at operation of the brake illustrated in Fig. 1 and showing a fixed-position condition at the brake operation;
Fig. 3 is a cross-sectional view taken along the line A - A in Fig. 1; and
Fig. 4 is a cross-sectional view taken along the line B - B in Fig. 1.

### DETAILED DESCRIPTION OF THE PREFERRED EMBODIMENT

In the rough, a parking-brake operating device 1 comprises a braking-force holding mechanism 2, an operating lever 3, a link mechanism 33, a release element 17 and a cable mounting element 13.

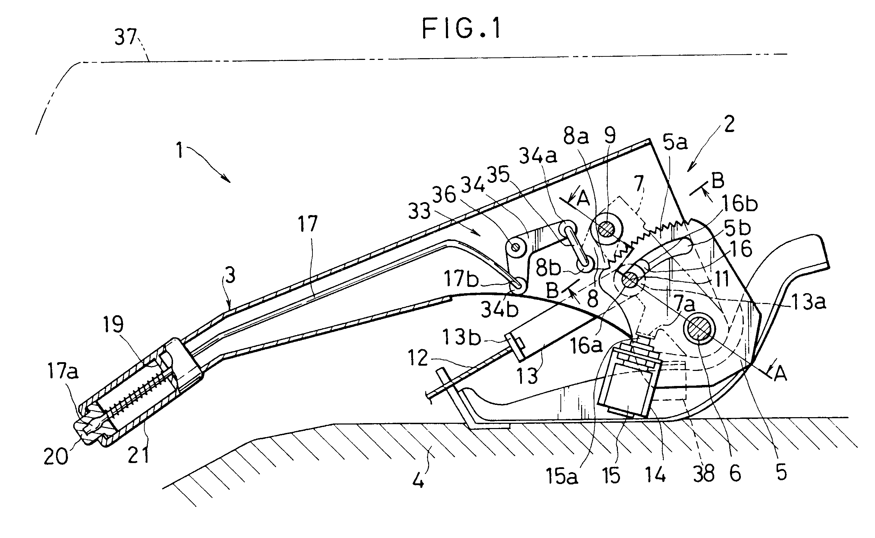

The braking-force holding mechanism 2 is so provided as to be upstanding at a location adjacent a seat on a center floor 4 of a body, and is composed of a plate-like bracket 5 formed, at its forward end, with a ratchet wheel 5a, a swing arm 7 supported on the bracket 5 through an angularly movable shaft 6 for angular movement, and a ratchet pawl 8 supported on the swing arm 7 through an angularly movable shaft 9 for angular movement and engageable with and disengageable from the ratchet wheel 5 so as to hold the swing arm 7 onto the bracket 5. An urging section, which is composed of a turning-back piece 7a formed such that a part of the swing arm 7 is folded or bent substantially perpendicularly, urges or pushes an actuator 15a of a brake detection switch 15 fixedly mounted to the bracket 5 through a support piece 14, at a location where the brake is released as illustrated in Fig. 1.

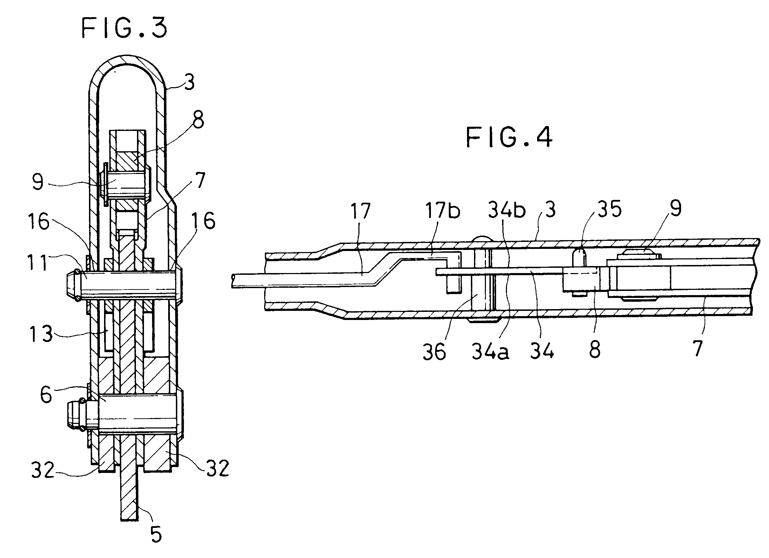

The operating lever 3, which is supported on the bracket 5 through the angularly movable shaft 6 coaxially with the swing arm 7 and for angular movement separately, has a proximal portion whose both sides are provided respectively with a pair of elongated openings 16 which extend along the angular movement direction of the operating lever 3 and which are eccentric with the angularly movable shaft 6, as shown in Figs. 1 and 3. A support shaft 11 extending through the swing arm 7 is loosely fitted in the bores 16.

On the basis of the relationship between the support shaft 11 provided on the swing arm 7 and the openings 16 provided in the operating lever 3, a predetermined quantity of relative rotational movement is permitted or allowed between the swing arm 7 and the operating lever 3. Under the brake-releasing condition as illustrated in Fig. 1, one sides 16a of the respective openings 16 are abutted against the left-hand side of the support shaft 11.

The bracket 5 is provided with an opening 5b eccentric with the angularly movable shaft 6, and the support shaft 11 extends through the opening 5b.

A pair of large-diameter spacers 32 shown in Fig. 3 are fitted about the angularly movable shaft 6 supporting the swing arm 7 and the operating lever 3 for angular movement relative to the bracket 5, at their respective locations between the outside of the swing arm 7 and the inside of the operating lever 3. The spacers 32 reduce frictional resistance between the swing arm 7 and the operating lever 3, to prevent the swing arm 7 and the operating lever 3 from being displaced relatively to the bracket 5.

The link mechanism 33 is composed of a bell crank 34 supported, for angular movement, on an angularly movable shaft 36 mounted to the operating lever 3, and a link element 35 whose both ends are supported respectively by one end 34a of the bell crank 34 and an end 8b of the ratchet pawl 8 for angular movement.

The rod-like release element 17, which is mounted within the operating lever 3, has one end 17a which is fixedly mounted to a release knob 20 projecting from the forward end of the operating lever 3. The other end 17b of the release element 17 is connected to the other end 34b of the bell crank 34 for angular movement.

The release element 17 is supported for sliding movement in the longitudinal direction of the operating lever 3 by the release knob 20 fitted in the forward end of the operating lever 3 and a support piece 19 provided within the forward end of the operating lever 3. The release element 17 is biased toward the left in Fig. 1 under elasticity of a coil spring 21 interposed between the release knob 20 and the support piece 19. By the biasing, the bell crank 34, to which the other end 17b of the release element 17 is connected, is so biased as to be rotated in the clockwise direction in Fig. 1 about the angularly movable shaft 36. The link element 35, whose one end is supported by the one end 34a of the bell crank 34 for angular movement, is so biased as to rotate the ratchet pawl 8 supported on the angularly movable shaft 9, in the counterclockwise direction in Fig. 1. A meshing portion 8a of the ratchet pawl 8 is urged against the ratchet wheel 5a of the bracket 5.

As shown in Fig. 4, the bell crank 34 is supported on a smaller-diameter section of the stepped angularly movable shaft 36 which extends through both sides of the operating lever 3 so as to be fixedly mounted thereto. The one side 34a of the bell crank 34 is axially positioned by an end face of a larger-diameter section of the shaft 36. The other end 17b of the release element 17 and the one end of the link element 35 supported respectively at both ends of the bell crank 34 for angular movement have their respective forward ends which are bent or folded substantially perpendicularly. These bent ends are inserted through the bell crank 35 from the other side 34b thereof. The release element 17 and the link element 35 are so held as to be clamped between the inner side of the operating lever 3 and the other end 34b of the bell crank 34. Thus, the release element 17 and the link element 35 are prevented from falling off from the bell crank 34. For this reason, it is unnecessary to apply processing for prevention of falling-off to the forward ends of the respective release element and link element 17 and 35.

Further, the support shaft 11 so provided as to extend through the swing arm 7 is connected to one end 13a of the cable mounting element 13 for angular movement. The other end 13b of the cable mounting element 13 is connected to the brake operating device through a control cable 12.

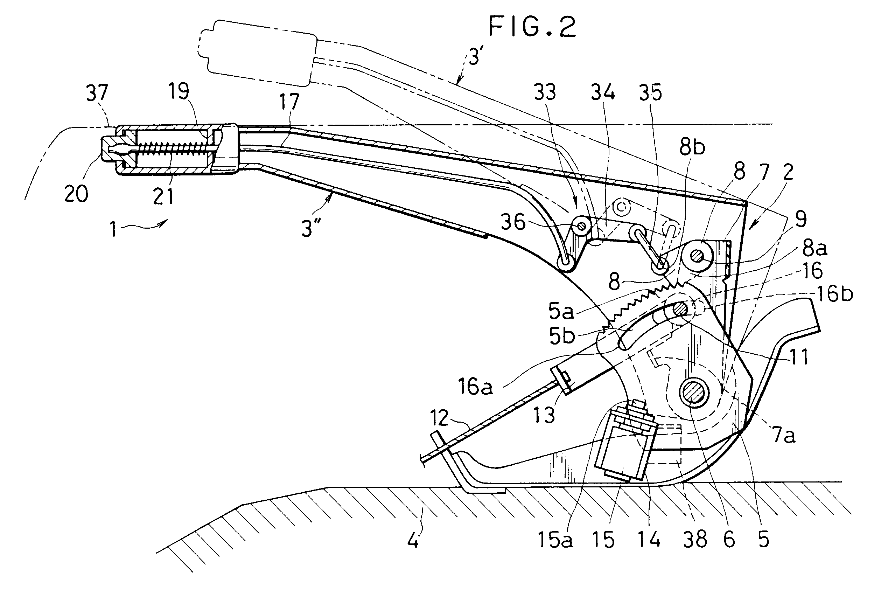

At brake operation, the operating lever 3 is first raised up from the break release condition as shown in Fig. 1. The operating lever 3 is moved angularly in the clockwise direction in Fig. 1 about the angularly movable shaft 6. The swing arm 7 is moved angularly in the clockwise direction through the support shaft 11 which is abutted against the one sides 16a of the respective openings 16 formed in the operating lever 3. The control cable 12 for operating the brake operating device by the cable mounting piece 13, which is supported on the support shaft 11, is pulled or tensioned to operate the brake. In the illustrated embodiment, when the operating lever 3 is moved angularly to a moving position 3' indicated by the two dot and dash lines in Fig. 2, the operating lever 3 is brought to the full-cock condition. The swing arm 7 is moved angularly to the braking position illustrated in Fig. 2, so that the brake is brought to the fully operating condition.

The swing arm 7 is held on the bracket 5 by meshing between the ratchet pawl 8 and the ratchet 5a at the braking position illustrated in Fig. 2, so that it is ensured that the brake operating force is maintained.

The operating lever 3 moved angularly to the moving position 3' of the full-cock is supported by the angularly movable shaft 6 independently of the swing arm 7. By the relationship between the support shaft 11 provided on the swing arm 7 and the openings 16 provided in the operating lever 3, relative movement is permitted until the other sides 16b of the respective openings 16 are abutted against the right-hand side of the support shaft 11. Thus, when an operator releases his hands from the operating lever 3, the latter is moved angularly in the counterclockwise direction in Fig. 2 about the angularly movable shaft 6 under the own weight. The operating lever 3 is pushed back to a predetermined position 3'' at the brake operation which is substantially in agreement with an upper face of a driver's seat 37 indicated by the two dot and dash lines. At this time, an angle defined between the ring element 35 and the bell crank 34 becomes large slightly, so that the bell crank 34 is moved angularly slightly in the clockwise direction about the angularly movable shaft 36. Since, however, the angularly moving direction is the same as the biasing direction due to the spring 21, the forces acting upon the release element 17 and the link mechanism 33 due to the elasticity of the spring 21 do not prevent angular movement of the operating lever 3 in the counterclockwise direction.

In the illustrated embodiment, the peripheral length of each of the openings 16 about the angularly movable shaft 6 is set correspondingly to the angle of the operating lever 3 through which the operating lever 3 reaches the height of the upper face of the driver's seat 37 from the full-cock position 3' where the brake is fully operated, so that the operating lever 3 is prevented from protruding from the driver's seat 37 more than the necessity, at the brake operation. Thus, getting-on and -off of the driver is made easy after operation of the parking brake, making it possible to prevent the space within the car from being reduced or narrowed. In this connection, a quantity of return of the operating lever 3 from the full-cock position 3' should not be limited, but may optionally be set in accordance with the arranging position of the parking-brake operating device 1 within the car, and the like. When the operating lever 3 is returned to the brake release position as shown in Fig. 1, however, discrimination will become difficult as to whether or not the brake is operated. Accordingly, it is desirable that an adequate quantity of return is set.

In the case where the brake is released, the operating lever 3 is gripped to push the release knob 20. The bell crank 34 connected to the forward end of the release element 17 is moved angularly in the counterclockwise direction. The ratchet pawl 8 is moved angularly in the clockwise direction by the link element 35 to move the meshing portion 8a away from the tooth faces of the ratchet 5a. Thus, the swing arm 7 is brought to an angularly movable condition. The swing arm 7 is moved angularly in the counterclockwise direction about the angularly movable shaft 6 by the restoring force of the brake which is transmitted from the controll cable 12 through the support shaft 11. After the support shaft 11 has been abutted, with a predetermined force, against the one sides 16a of the respective openings 16 which are formed in the operating lever 3, the force of the hands gripping the operating lever 3 is loosened and the movement of the operating lever 3 follows, the swing arm 7 and the operating lever 3 are moved angularly together. The operating lever 3 is returned to its original position, and the swing arm 7 is also returned to its original position, so that the brake is fully released. Thus, the brake is brought to the release condition.

Under the condition that the operating lever 3 is returned to the position illustrated in Fig. 1, the one side 16a of the opening 16 formed in the operating lever 3 is pushed by the left-hand side of the support shaft 11, and the lower portion of the operating lever 3 is supported by a support piece 38 which is fixedly mounted to the bracket 5. Accordingly, it can be avoided that displacement occurs in the operating lever 3 due to vibration and the like during running, to generate noises.

In the embodiment, only in the case where the turning-back piece 7a formed such that a part of the swing arm 7 is bent or folded substantially perpendicularly pushes the actuator 15a of the brake detection switch 15 at the original position of the brake release, a brake warning lamp (not shown) arranged on an instrument panel is turned off. Accordingly, it is possible to discriminate the operating condition of the brake further easily.

## Claims

1. A mechanism for operating a vehicle parking-brake (hand brake), comprising: a pivotable operating lever (3); a brake-operating member (13) movable by the lever (3); a ratchet mechanism (8, 5a) for holding the lever and operating member in a brake-engaged position, including a plate-like bracket (5) having a ratchet wheel (5a) and mounted at a location adjacent a seat on a body floor, a swing arm (7) mounted to said bracket for angular movement, and a ratchet pawl (8) supported on said swing arm for angular movement and engageable with and disengageable from said ratchet so as to hold said swing arm onto said bracket; and a release element (17) mounted to said operating lever, said release element having one end thereof connected to a release knob (20) projecting from said operating lever; in which the operating member (13) is coupled to the operating lever (3) through a lost-motion connection (11, 16) and the ratchet mechanism (5a, 8) acts to retain the brake operating member (13), whereby after the operating lever has been moved to engage the brake, it can be moved partly towards its rest position by an amount determined by the lost-motion connection, while the operating member is held in its operated position by the ratchet mechanism, characterised in that:
the operating lever (3) is supported on said bracket coaxially with said swing arm and for angular movement, and has at least one opening (16);
a support shaft (11) is mounted on said swing arm and is loosely fitted in said opening (16) so as to permit a predetermined amount of relative movement between said swing arm and said operating lever;
a bell crank (34) is supported on said operating lever for angular movement, and a link element (35) has its ends connected respectively to one end of said bell crank and said ratchet pawl for angular movement;
the other end of said release element is connected to the other end of said bell crank; and
a cable mounting element (15) has one end thereof connected to said support shaft, and the other end connected to a brake operating device through a control cable (12).

2. The parking-brake operating device according to Claim 1, wherein said bracket (5) is provided therein with at least one arcuate opening (5b) extending concentrically with a pivot shaft (6) for said swing arm and said operating lever, and wherein said support shaft (11) provided on said swing arm extends through said opening in said bracket.

3. The parking-brake operating device according to Claim 1 or 2, wherein said swing arm is provided with an urging section (7a) which pushes an actuator of a brake detection switch (15).

4. The parking-brake operating device according to Claim 3, wherein said urging section is formed such that a part of said swing arm is folded.

5. The parking-brake operating device according to Claim 1, 2, 3 or 4, wherein said opening (16) in said operating lever is concentric with a pivot (6) of said operating lever.

6. The parking-brake operating device according to any of Claims 1 to 5, wherein said bell crank (34) is supported by a smaller-diameter section of a stepped angularly movable shaft (36) fixedly mounted to said operating lever, and wherein said bell crank has one side thereof which is axially positioned by an end face of a larger-diameter section of said stepped shaft.

7. The parking-brake operating device according to Claim 6, wherein said release element and said link element have respective ends which are folded, and wherein said end of said release element and said end of said link element are connected to said bell crank in a direction from said smaller-diameter section of said stepped shaft towards said larger-diameter section thereof.

8. The parking-brake operating device according to any of Claims 1 to 7, including a coil spring (21) interposed between a support piece (19) provided on said operating lever and said release knob (20).

9. The parking-brake operating device according to any of Claims 1 to 8, including at least one spacer (32) fitted in an angularly movable shaft between an outside of said swing arm (7) and an inside of said operating lever (3).

## Patentansprüche

1. Mechanismus zum Betätigen einer Fahrzeug-Feststellbremse (Handbremse), der folgendes aufweist:
- einen schwenkbaren Betätigungshebel (3);
- ein Bremsbetätigungselement (13), das sich durch den Hebel (3) bewegen läßt;
- einen Ratschenmechanismus (8, 5a) zum Halten des Hebels und des Betätigungselements in einer Bremseingriffsstellung, wobei der Ratschenmechanismus (8, 5a) einen plattenartigen Halter (5), der eine Klinkenradeinrichtung (5a) besitzt und an einer Stelle in der Nähe eines Sitzes an einem Fahrzeugkörperboden angebracht ist, einen an dem Halter winkelmäßig beweglich angebrachten Schwenkarm (7) sowie eine an dem Schwenkarm winkelmäßig beweglich gehalterte Sperrklinke (8) aufweist, die mit der Klinkeneinrichtung in Eingriff bringbar und von dieser lösbar ist, um den Schwenkarm auf dem Halter festzuhalten; und
- ein Freigabeelement (17), das an dem Betätigungshebel angebracht ist, wobei das eine Ende des Freigabeelements mit einem von dem Betätigungshebel vorstehenden Freigabeknopf (20) verbunden ist;
wobei das Betätigungselement (13) mit dem Betätigungshebel (3) durch eine Totgang-Verbindung (11, 16) gekoppelt ist und der Ratschenmechanismus (5a, 8) ein Festhalten des Bremsbetätigungselements (13) bewirkt, so daß nach dem Bewegen des Betätigungshebels, um die Bremse in Eingriff zu bringen, sich dieser Betätigungshebel in einem durch die Totgang-Verbindung festgelegten Ausmaß teilweise in Richtung seiner Ruheposition bewegen läßt, während das Betätigungselement durch den Ratschenmechanismus in seiner betätigten Position gehalten wird,
dadurch gekennzeichnet,
daß der Betätigungshebel (3) an dem Halter koaxial zu dem Schwenkarm winkelmäßig beweglich angebracht ist und wenigsten eine Öffnung (16) aufweist;
daß eine Tragachse (11) an dem Schwenkarm angebracht ist und in die Öffnung (16) lose eingepaßt ist, so daß ein vorbestimmtes Ausmaß an Relativbewegung zwischen dem Schwenkarm und dem Betätigungshebel ermöglicht ist;
daß ein Kniehebel (34) an dem Betätigungshebel winkelmäßig beweglich gehaltert ist und ein Verbindungselement (35) mit seinen Enden mit dem Kniehebel bzw. der Sperrklinke winkelmäßig beweglich verbunden ist;
daß das andere Ende des Freigabeelements mit dem anderen Ende des Kniehebels verbunden ist; und
daß ein Seilbefestigungselement (15) mit seinem einen Ende mit der Tragachse verbunden ist und mit seinem anderen Ende durch ein Steuerseil (12) mit einer Bremsbetätigungsvorrichtung (12) verbunden ist.

2. Festellbremsen-Betätigungsvorrichtung nach Anspruch 1,
wobei in dem Halter (5) wenigstens eine bogenförmige Öffnung (5b) vorgesehen ist, die konzentrisch zu einer Schwenkachse (6) für den Schwenkarm und den Betätigungshebel verläuft, und wobei sich die an dem Schwenkarm vorgesehene Tragachse (11) durch die Öffnung in dem Halter hindurcherstreckt.

3. Feststellbremsen-Betätigungsvorrichtung nach Anspruch 1 oder 2,
wobei der Schwenkarm mit einem Andruckbereich (7a) versehen ist, der gegen ein Betätigungsglied eines Bremsdetektionsschalters (15) drückt.

4. Feststellbremsen-Betätigungsvorrichtung nach Anspruch 3,
wobei der Andruckbereich derart ausgebildet ist, daß ein Teil des Schwenkarms umgebogen ist.

5. Festellbremsen-Betätigungsvorrichtung nach Anspruch 1, 2, 3 oder 4,
wobei die Öffnung (16) in dem Betätigungshebel konzentrisch mit einem Schwenkpunkt (6) des Betätigungshebels ist.

6. Feststellbremsen-Betätigungsvorrichtung nach einem der Ansprüche 1 bis 5,
wobei der Kniehebel (34) durch einen Abschnitt kleineren Durchmessers einer abgestuften, winkelmäßig beweglichen Achse (36) gehaltert ist, die an dem Betätigungshebel fest angebracht ist, und wobei der Kniehebel mit seiner einen Seite durch eine Endfläche eines Abschnitts größeren Durchmessers der abgestuften Achse axial positioniert ist.

7. Feststellbremsen-Betätigungsvorrichtung nach Anspruch 6,
wobei das Freigabeelement und das Verbindungselement jeweils umgebogene Enden aufweisen und wobei das Ende des Freigabeelements und das Ende des Verbindungselements mit dem Kniehebel verbunden sind, und zwar in Richtung von dem Abschnitt kleineren Durchmessers der abgestuften Achse in Richtung auf ihren Abschnitt größeren Durchmessers.

8. Feststellbremsen-Betätigungsvorrichtung nach einem der Ansprüche 1 bis 7,
mit einer Schraubenfeder (21), die zwischen einem an dem Betätigungshebel vorgesehenen Halterungsstück (19) und dem Freigabeknopf (20) angeordnet ist.

9. Feststellbremsen-Betätigungsvorrichtung nach einem der Ansprüche 1 bis 8,
mit wenigstens einem Abstandselement (32), das auf eine winkelmäßig bewegliche Achse zwischen einer Außenseite des Schwenkarms (7) und einer Innenseite des Betätigungshebels (3) gepaßt ist.

## Revendications

1. Mécanisme pour actionner un frein de stationnement de véhicule (frein à main), comprenant : un levier de manoeuvre pivotant (3); un élément d'actionnement de frein (13) déplaçable par le levier (3); un mécanisme à cliquet (8, 5a) pour maintenir le levier et pour faire fonctionner l'élément dans une position en prise avec le frein, incluant un support (5) en forme de plaque possédant une roue à rochet (5a) et monté sur un endroit adjacent à un siège sur la caisse de véhicule, un bras pivotant (7) monté sur ledit support en vue d'un mouvement angulaire, et un doigt d'encliquetage (8) supporté sur ledit bras pivotant en vue d'un mouvement angulaire et pouvant être mis en et hors prise avec ledit cliquet de façon à maintenir ledit bras pivotant sur ledit support; et un élément de relâchement (17) monté sur ledit levier de manoeuvre, ledit élément de relâchement présentant une extrémité connectée à un bouton de relâchement (20) faisant saillie dudit levier de manoeuvre; dans lequel l'élément d'actionnement (13) est accouplé au levier de manoeuvre (3) par une connexion de mouvement à vide (11, 16), et le mécanisme à cliquet (5a, 8) agit pour retenir l'élément actionnant le frein (13), par quoi, après le déplacement du levier de manoeuvre afin d'être mis en prise avec le frein, il peut être déplacé partiellement vers sa position de repos d'une quantité de mouvement déterminée par la connexion de mouvement à vide, tandis que l'élément de manoeuvre est maintenu dans sa position actionnée par le mécanisme à cliquet, caractérisé en ce que :
le levier de manoeuvre (3) est supporté sur ledit support coaxialement avec ledit bras pivotant et en vue d'un mouvement angulaire, et possède au moins une ouverture (16);
un arbre de support (11) est monté sur ledit bras pivotant et est ajusté avec jeu dans ladite ouverture (16) de façon à permettre une quantité prédéterminée de mouvement relatif entre ledit bras pivotant et ledit levier de manoeuvre;
un levier coudé (34) est supporté sur ledit levier de manoeuvre en vue d'un mouvement angulaire, et un élément de bielle (35) a ses extrémités connectées respectivement à une extrémité dudit levier coudé et dudit doigt d'encliquetage en vue d'un mouvement angulaire;
l'autre extrémité dudit élément de relâchement est connectée à l'autre extrémité dudit levier coudé; et
un élément de montage de câble (15) présente une extrémité connectée audit arbre de support, et l'autre extrémité connectée à un dispositif actionnant le frein par un câble de commande (12).

2. Dispositif d'actionnement du frein de stationnement selon la revendication 1, dans lequel ledit support (5) est pourvu à l'intérieur d'au moins une ouverture arquée (5b) s'étendant concentriquement à un arbre de pivot (6) pour ledit bras pivotant et ledit levier de manoeuvre, et dans lequel ledit arbre de support (11) prévu sur ledit bras pivotant s'étend à travers ladite ouverture dans ledit support.

3. Dispositif d'actionnement du frein de stationnement selon la revendication 1 ou 2, dans lequel ledit bras pivotant est pourvu d'une section de sollicitation (7a) qui pousse un actionneur d'un commutateur de détection de frein (15).

4. Dispositif d'actionnement du frein de stationnement selon la revendication 3, dans lequel ladite section de sollicitation est réalisée de façon qu'une partie dudit bras pivotant soit pliée.

5. Dispositif d'actionnement du frein de stationnement selon la revendication 1, 2, 3 ou 4, dans lequel ladite ouverture (16) dans ledit levier de manoeuvre est concentrique avec un pivot (6) dudit levier de manoeuvre.

6. Dispositif d'actionnement du frein de stationnement selon l'une des revendications 1 à 5, dans lequel ledit levier coudé (34) est supporté par une section de plus petit diamètre d'un arbre mobile (36) étagé angulairement monté fixement sur ledit levier de manoeuvre, et dans lequel ledit levier coudé présente un côté qui est positionné axialement par une face d'extrémité d'une section de plus grand diamètre dudit arbre étagé.

7. Dispositif d'actionnement du frein de stationnement selon la revendication 6, dans lequel ledit élément de relâchement et ledit élément de bielle ont des extrémités respectives qui sont pliées, et dans lequel ladite extrémité dudit élément de relâchement et ladite extrémité dudit élément de bielle sont connectées audit levier coudé suivant une direction de ladite section de plus petit diamètre dudit arbre étagé vers ladite section de plus grand diamètre de celui-ci.

8. Dispositif d'actionnement du frein de stationnement selon l'une des revendications 1 à 7, incluant un ressort hélicoïdal (21) interposé entre une pièce de support (19) prévue sur ledit levier de manoeuvre et ledit bouton de relâchement (20).

9. Dispositif d'actionnement du frein de stationnement selon l'une des revendications 1 à 8, comprenant au moins une pièce d'écartement (32) adaptée sur un arbre angulairement mobile entre un extérieur dudit bras pivotant (7) et un intérieur dudit levier de manoeuvre (3).
